# FASCICULE DE BREVET EUROPEEN

(11) **EP 2 351 892 B1**
(45) Date de publication et mention de la délivrance du brevet: **06.06.2018**
(21) Numéro de dépôt: 10191857.1
(22) Date de dépôt: 19.11.2010
(51) Int. Cl.: E04D 5/02, B32B 5/00, D06N 3/00, C09J 7/02, B32B 27/08, B32B 7/12

(54) **FILM AUTOADHÉSIF MULTICOUCHE DE PROTECTION ANTI-GRAFFITI**
SELBSTKLEBENDE MEHRSCHICHTFOLIE FÜR ANTI-GRAFFITISCHUTZ
SELF-ADHESIVE MULTI-LAYER FILM FOR ANTI-GRAFFITI PROTECTION

(30) Priorité: 20.11.2009 FR 0958221
(43) Date de publication de la demande: 03.08.2011
(73) Titulaire: Hexis, 34110 Frontignan (FR)
(72) Inventeur: Baudrion, Christophe, 34140, BOUZIGUES (FR); Masson, Frédéric, 34140, LOUPIAN (FR); Mateu, Michel, 34540, BALARUC LE VIEUX (FR)
(74) Mandataire: Domange, Maxime

(56) Documents cités:
- WO-A1-2005/044558
- WO-A1-2005/108062
- US-B1- 6 399 193

## Description

La présente invention concerne un film plastique décoratif autoadhésif ayant des propriétés de protection contre les graffiti.

Ce type de film est destiné à servir de support de décoration et/ou de communication visuelle, ainsi que de protection sur des objets tridimensionnels habituellement victimes de malveillance, tels que des véhicules de transport en commun, notamment trains, métro, bus ou véhicules professionnels, et des objets présents dans les lieux publics, tels que poubelles, distributeurs de billets, rideaux métalliques de magasins.

Plus particulièrement, un film plastique autoadhésif selon la présente invention est destiné à être utilisé sur des surfaces externes et internes des véhicules roulants ferroviaires.

Les véhicules de transport en commun subissent souvent des dégradations de toute sorte, dont l'inscription de graffiti. Ces derniers y sont appliqués à l'extérieur comme à l'intérieur, sur toutes les parois du véhicule : murs, fenêtres et plafonds.

Pour ne pas nuire au confort des passagers, des personnels dédiés sont commissionnés pour nettoyer les surfaces dégradées. Selon le degré de dégradation, la surface doit être entièrement repeinte en cabine de peinture, ce qui nécessite l'immobilisation du véhicule et provoque des coûts d'entretien importants.

Des revêtements de protection anti-graffiti sont connus.

Ils se présentent, selon un premier mode de réalisation, sous forme peinture ou vernis à propriété anti-graffiti, directement appliqué sur la surface du support à protéger. Des peintures ou vernis de ce type ont été décrits, notamment, dans les documents US 7 247 671, US 7 501 472, US 6 288 163 et US 4 280 947.

Ces peintures ou vernis sont réalisés à partir d'un ou plusieurs composés précurseurs de polymères présentant des propriétés de diminution de la tension de surface, pour conférer des propriétés anti-graffiti, en mélange avec des agents de réticulation, permettant d'obtenir un dit polymère anti-graffiti réticulé après durcissement en présence dudit agent de réticulation. On connaît, en particulier, des composés monomères fluorés donnant lieu à l'obtention de polymères ou copolymères fluorés présentant ces propriétés anti-graffiti dans le cadre d'une application sous forme de vernis ou peinture.

Toutefois, à l'usage, ces vernis ou peintures anti-graffiti finissent par être dégradés et les surfaces peintes doivent être poncées et nettoyées avant d'être repeintes. Cette opération nécessite l'immobilisation de l'objet et son déplacement dans une cabine de peinture, ce qui s'avère contraignant et coûteux, lorsqu'il s'agit notamment d'un véhicule de taille importante, comme un train, un bus ou une rame de métro. Elle nécessite, en outre, l'utilisation de peinture dont les solvants, qui sont évaporés sur le lieu de pose, imposent des systèmes de protection des personnels spécifiques et posent des problèmes à caractère écologique.

Pour ces raisons, des films préformés à propriété anti-graffiti et aptes à être appliqués sur la surface d'un support à protéger, ont été proposés pour remplacer lesdites peintures ou vernis à propriété anti-graffiti.

Les films actuellement disponibles dans le commerce sont des films multicouches autoadhésifs, comprenant un film en surface anti-graffiti de type polyéthylène téréphtalate PET ou polycarbonate PC qui présente des propriétés de résistance à l'abrasion, c'est-à-dire aux rayures ou salissures mécaniques, éventuellement recouvert d'une couche de surface aux propriétés anti-graffiti, tel qu'un film de fluoropolymère. Cette première couche de protection est, en général, revêtue sur une couche présentant des propriétés de résistance à un impact mécanique et des propriétés décoratives, par l'inclusion de pigments colorants notamment, cette couche de support et de décoration étant elle-même revêtue sur sa face inférieure d'une couche adhésive permettant de coller l'ensemble sur une surface de support à protéger. Les films multicouches actuellement disponibles dans le commerce présentent une couche de décoration en PVC plastifié. Le complexe ainsi obtenu est protégé temporairement, de façon connue, par un liner, par exemple un papier siliconé.

Contrairement aux peintures, les films autoadhésifs anti-graffiti ainsi obtenus peuvent être retirés pour être remplacés lorsqu'ils sont dégradés.

Cependant, l'inconvénient de ces films est leur rigidité apportée d'une part par la couche de PET qui permet la résistance aux graffiti, et d'autre part par une couche de durcissement, permettant de palier au défaut de résistance mécanique ou risque de dégradation de la couche de PET qu'ils incluent, ces polymères polyesters ayant l'inconvénient majeur d'être peu résistants aux agressions extérieures et difficilement utilisables sur de longues durées dans des conditions extérieures.

C'est pourquoi, ces films ne sont pas allongeables manuellement à température ambiante mais doivent être thermoformés lors de l'application sur la surface du support à protéger. En effet, la dureté et la rigidité apportées par les couches de durcissement ne supportent aucun allongement sans rupture et rendent impossible le recouvrement d'une surface tridimensionnelle par simple étirement manuel à température ambiante. En pratique, leur emploi est souvent limité aux surfaces planes ou aux courbes bidimensionnelles ne présentant pas une déformation trop importante.

Or, les designers de rames de train ou autres objets imposent des formes de plus en plus courbes et bombées selon trois dimensions, qui ne peuvent plus être protégées valablement des graffiti avec ce type de film, obligeant les fabricants à revenir vers des peintures avec les inconvénients cités plus haut.

De surcroît, les demandes en matériaux recyclables sont de plus en plus importantes et le PVC, matériau décoratif le plus répandu dans les films anti-graffiti actuels, est mal toléré au recyclage compte-tenu des dégagements d'acide chlorhydrique qu'il implique à cette occasion.

Enfin, la mise en oeuvre de films autoadhésifs soulève une difficulté additionnelle au regard de l'application des normes requises dans les utilisations dans des véhicules de transport en commun et, notamment, les véhicules roulants ferroviaires, les films de décoration et de protection devant répondre aux normes françaises suivantes :
- classés au moins G1 selon la norme française « Matériel roulant ferroviaire - Protection vis-à-vis des graffiti » NF F 31-112,
- classés au moins M1 selon la norme française de résistance au feu « Essais de réaction au feu des matériaux » NF P 92-501, et
- classés F4 selon la norme française « Comportement au feu » relative à la toxicité des fumées de combustion, NF F 16-101.

La norme NF F 16-101 classe les produits selon la toxicité des fumées qui se dégagent lorsque qu'un gramme de film collé sur une plaque d'aluminium est soumis à une flamme. Elle détermine un indice de fumée (IF) dont la valeur mesurée selon les méthodes NF X 70-100 et NF X 10-702 permet de classer le produit dans une gamme allant de F1 à F5 (voir tableau A). La norme NF X 70-100 décrit la méthode pour mesurer les opacités des fumées. C'est l'addition de ces valeurs qui permettent le calcul de l'indice de fumée IF dont est déduit le classement F. L'indice de fumée IF est fonction de la concentration critique des différents en gaz toxiques (voir tableau B). L'indice de Fumée (IF) se calcule selon la formule suivante : IF = Dm/100 + VOF4/30 + ITC/2 avec :
- Dm = la densité optique spécifique maximale de la fumée, et
- VOF4 = la valeur d'obscurcissement dû à la fumée au terme des 4 premières minutes de l'essai, et
- ITC (indice de toxicité conventionnel) = 100 Σ ti/CCi où ti est la concentration en gaz toxique mesuré et CCi sa concentration critique du gaz toxique mesuré.

Les 3 mesures Dm, VOF4 et ITC sont réalisées selon la norme NF X 10-702.

**Tableau A : détermination de la classe du matériau en fonction de son indice de fumées**

| Classe | IF |
|---|---|
| F0 | ≤ 5 |
| F1 | ≤ 20 |
| F2 | ≤ 40 |
| F3 | ≤ 80 |
| F4 | ≤ 120 |
| F5 | > 120 |

Pour déterminer l'IF, on détecte les gaz toxiques CO2, CO, HCl, HBr, HF, SO2 et HCN dont la quantité émise est pondérée par leur toxicité (voir tableau B).

**Tableau B : concentration critique (CCi) par gaz permettant de pondérer la toxicité des fumées**

| Gaz | CCi (mg/m²) |
|---|---|
| CO | 1 750 |
| CO₂ | 90 000 |
| HCl | 150 |
| HBr | 170 |
| HCN | 55 |
| HF | 17 |
| SO₂ | 260 |

Dans WO 2005/108062, on a proposé un complexe décoratif lamifié de protection anti-graffiti présentant des propriétés de résistance au feu et de faible toxicité des fumées de combustion. Ce complexe décoratif comprend une structure lamifiée résultant de la combinaison d'un film de polymère halogéné en surface appliqué directement sous pression par-dessus un substrat constitué de différents polymères choisis indifféremment parmi des polymères de polyester, polycarbonate, polyuréthane, polyacrylique ou PVC. Ces structures lamifiées sont relativement rigides et sont destinées à être appliquées par thermoformage sur des surfaces tridimensionnelles.

En fait, dans tous les exemples de réalisation proposés, un film PVC constitue le composant majoritaire en termes de proportion pondérale. D'autre part, les complexes lamifiés obtenus sont décrits comme devant être appliqués directement sur le support par thermoformage, sans couche d'adhésif. Cependant, dans l'exemple 1, il apparaît que la satisfaction des critères de résistance au feu, selon une classification au moins M1 de la norme de résistance au feu NF P 92-101, et de faible toxicité des fumées de combustion selon la classification F3 de toxicité des fumées de combustion de la norme NF F 16-101, est biaisée car elle requiert la mise en oeuvre d'une couche d'adhésif en sous-face du substrat de près de 100 g/m², représentant près de 40% de la proportion pondérale de la structure lamifiée décorative constituée d'un film de polymère fluoré appliqué sur un film hybride de PVC et de polyacrylique. Une telle quantité d'adhésif suggère que la structure lamifiée en l'absence de l'adhésif, comme c'est le cas pour une application par thermoformage, ne satisferait pas les normes indiquées.

Le but de la présente invention est de fournir un film présentant des propriétés de décoration et de protection anti-graffiti autoadhésif, de manière à le rendre remplaçable en cas de dégradation, et vérifiant les propriétés suivantes de :
- étirabilité manuelle à température ambiante, notamment de 0 à 35°C, plus particulièrement de 15 à 25°C, lui permettant d'être appliqué sur des formes tridimensionnelles,
- tout en étant apte à être coloré et/ou imprimé pour servir de support de décoration ou de communication, et
- des propriétés anti-graffiti, le rendant apte à être classé au moins G1 selon la norme NF F 31-112, et
- être classé :
   - au moins M1 selon la norme de résistance au feu NF P 92-101, et
   - au moins F4 selon la norme de toxicité des fumées de combustion NF F 16-101 et les méthodes NF X 70-100 et NF X 10-702, et ce
- sans contenir de PVC pour limiter le dégagement potentiel d'acide chlorhydrique lors de sa combustion en cas de recyclage.

Le film autoadhésif étirable manuellement peut aussi, de par sa constitution, être étiré thermiquement, c'est-à-dire par chauffage.

La flexibilité et l'aptitude à l'élongation du film adhésif permettent sa pose sur des surfaces de formes complexes. Le film peut épouser les surfaces fortement courbées ou angulaire notamment à angle droit ou aigu telles que les surfaces de poignées de porte ou pied de table à section circulaire pour les surfaces fortement courbées, ou rebords ou tranche de plateau ou pied de table à section rectangulaire voire triangulaire pour les surfaces planes à rebords angulaires.

On entend ici par "étirable manuellement", un film dont en outre la résistance à la traction est inférieure à 150 N/inch (soit inférieur à environ 6000 N/m). Il faut en effet que le film soit étirable mais que cet étirement ne requière pas une force de traction trop élevée pour être étirable manuellement.

Ces paramètres sont mesurés en étirant le film à l'aide d'un dynamomètre et en mesurant l'allongement nécessaire à sa rupture (norme NF EN 1940 (indice X41-025)) et la force de la traction nécessaire à sa rupture (norme NF EN 1941 (indice X41-021)). Ces valeurs sont données en N/inch ou N/m pour la résistance à la traction et pourcentage d'allongement pour l'allongement à la rupture.

On considère ici qu'un film est suffisamment étirable et peut être posé aisément, notamment étiré manuellement sur une surface fortement courbe ou anguleuse, si son allongement à la rupture est supérieur à 50%, de préférence supérieur à 100%, et sa résistance à la traction inférieure 150 N /inch.

Plus précisément, la présente invention fournit un film autoadhésif multicouche de protection anti-graffiti comprenant un complexe multicouche consistant dans :
- une couche de protection anti-graffiti en surface constituée d'un film de polymère fluoré transparent, et
- une première couche d'adhésif de polymère non halogéné transparent, et
- un film de support de décoration constitué d'un polymère non halogéné, et
- une deuxième couche d'adhésif sensible à la pression de polymère non halogéné.
ledit complexe multicouche présentant des propriétés le rendant apte à être étirable manuellement à température ambiante, notamment de 0 à 35°C, plus particulièrement de 15 à 25°C pour être appliqué sur un support de surface tridimensionnelle, des propriétés d'allongement telles que la force de traction dudit complexe multicouche, pour obtenir un allongement de 20%, est inférieure ou égale à 2 000 N/m.

Plus particulièrement, ledit complexe multicouche présente une épaisseur de 50 à 500 µm et un allongement à la rupture supérieur à 100% avec une résistance à la traction inférieure à 6 000 N/m.

Avantageusement, lesdits complexes multicouches selon l'invention présentent des propriétés de résistance au feu et de toxicité réduite à la combustion, telles que :
a) il ne s'enflamme pas lors de l'essai par rayonnement réalisé selon la norme NF P 92/501, et
b) son indice de fumée IF= = Dm/100 + VOF4/30 + ITC/2 est strictement inférieur à 120, de préférence inférieur ou égale à 80, et
c) Les écarts colorimétriques moyens (delta E) donnés dans l'espace CIE 1976 (L*, a*, b*) dudit film autoadhésif après application et nettoyage des graffiti selon la norme NF F 31-112 sont tous inférieurs ou égaux à 1.Les propriétés de résistance au feu (a) et de toxicité réduite (b) telles que définies ci-dessus sont telles que ledit film est classé au moins M1 selon la norme française de réaction au feu NF P 92-501 et au moins F4, de préférence au moins F3, selon la norme française de toxicité des fumées NF F 16-101 et les méthodes NF X 70-100 et NF X 10-702. Et les propriétés de variation des couleurs (c) telles que définies ci-dessus correspondent au moins au classement G1, de préférence G0, selon la norme française de protection anti-graffiti NF F 31-112.

Ladite couche de polymère fluoré constitue la couche supérieure, exposée en surface lorsque ledit film autoadhésif est appliqué sur une surface support tridimensionnelle par l'intermédiaire de ladite deuxième couche d'adhésif sensible à la pression, celle-ci étant appliquée sur la face inférieure dudit film polymère acrylique, ladite première couche d'adhésif étant appliquée contre et entre les face inférieure dudit film de polymère fluoré et face supérieure dudit film de polymère acrylique.

Les films de polymère anti-graffiti présentent des propriétés d'allongement supérieures au vernis anti-graffiti. Les films de polymères fluorés anti-graffiti présentent des propriétés de résistance mécaniques élevées pour une application en extérieur tout en présentant des propriétés d'allongement requises.

Les films de polymère non halogéné et les couches d'adhésif de polymère non halogéné présentent l'avantage de dégager des substances moins toxiques au regard de la norme française de toxicité des fumées NF F16-101.

On comprend également que les deux films de protection anti-graffiti de polymère fluoré, d'une part, et film de support de décoration de polymère non halogéné, d'autre part, présentent chacun des propriétés de souplesse et d'élasticité les rendant aptes à suivre le contour d'une surface non plane et/ou tridimensionnelle par étirement manuelle à température ambiante.

On comprend que le film de fluoropolymère de surface ne présente pas intrinsèquement des propriétés de résistance au feu et de toxicité réduite à la combustion. Toutefois, sa proportion pondérale et/ou en épaisseur dans le complexe multicouche est suffisamment faible pour que le total des proportions pondérales des couches d'adhésif et du polymère non halogéné, qui doivent eux présenter des propriétés de résistance au feu et de toxicité réduite à la combustion, soit suffisamment important pour que complexe multicouche vérifie dans sa globalité les classements M1 et F4 en cause.

Plus particulièrement, ledit complexe multicouche comprend :
- moins de 30% en poids ou en épaisseur de dit film de polymère fluoré anti-graffiti, et
- plus de 70% en poids ou en épaisseur de dit polymère non halogéné, à titre de dit film de support de décoration, et dites première et deuxième couches d'adhésif.

Ces proportions relatives permettent que la quantité de fluor dégagée par le film anti-graffiti de polymère fluoré reste compatible avec un classement F4 selon la norme NF F 16-101.

De préférence, ledit film de support de décoration de polymère non halogéné est un film obtenu par enduction, ledit polymère non halogéné présentant une température de transition vitreuse Tg inférieure à 0°C, et ledit polymère étant choisi parmi un polyuréthane ou un polymère ou copolymère comprenant au moins des monomères vinyliques choisis parmi les monomères vinyl, vinylacétate et acrylate.

Des polymères présentant de telles températures de transition vitreuse, d'une part, et, d'autre part, se présentant sous forme de film obtenu par enduction, c'est-à-dire un film "coulé" et non pas extrudé, fournissent des complexes multicouches selon la présente invention présentant les propriétés requises d'étirabilité à température ambiante pour des épaisseurs et compositions de complexes tels que définis ci-dessus.

Ces polymères vinyliques, de par leur composition chimique, présentent, en outre, aussi des propriétés requises de résistance au feu et de toxicité réduite des fumées de combustion pour fournir des complexes multicouches présentant lesdites propriétés de résistance au feu et de toxicité réduite à la combustion, tels que définis ci-dessus.

On entend ici, plus particulièrement, par monomères acrylate, des monomères de formule CH2=CR1-COOR2 avec R1 et R2 qui sont des atomes d'hydrogène ou des radicaux alkyl éventuellement substitués.

On cite encore plus particulièrement des copolymères de monomères acrylate et styrène ou encore des copolymères d'acétate de vinyl et d'éthylène.

A titre de film de support de décoration, on utilisera plus particulièrement encore, comme polymère non halogéné présentant les propriétés requises d'allongement, de résistance au feu et de toxicité réduite des fumées de combustion, un polymère polyuréthane ou polyacryl iq ue.

Dans un mode préféré de réalisation, ledit polymère non halogéné du film de support de décoration est un polymère acrylique.

Les films de polymère acrylique présentent l'avantage de ne pas dégager les substances les plus toxiques décrites dans le tableau B telles que HCl, HBr, HCN, HF et SO₂, bien qu'ils dégagent tout de même du CO et CO2 lesquels, compte tenu de leurs concentrations critiques ne représentent pas une toxicité importante.

Et, sous réserve d'une sélection d'un grade suffisamment souple/de faible rigidité, les polymères polyacryliques (grade de faible rigidité), présentent des propriétés de souplesse et d'allongement les rendant aptes à suivre le contour de toute surface non plane et/ou tridimensionnelle par étirement manuel à température ambiante.

En outre, les polymères acryliques ne dégagent pas de substance toxique, comme l'acide cyanhydrique HCN, lors de leur exposition au feu, contrairement aux polymères polyuréthanes ou polyamides. D'une manière générale, les polymères acryliques sont relativement résistants aux agressions extérieures et à l'hydrolyse et donc appropriés pour une utilisation sur des longues durées, contrairement aux polymères polyester. D'autre part, ils peuvent être imprimés sans dépôt d'une couche supplémentaire de surface et moyennant la sélection de grade de polymère particulier. Il est possible de trouver de polymères acryliques présentant les propriétés de souplesse requises par la présente invention notamment en mettant en oeuvre des agents plastifiants comme additif.

Selon une autre caractéristique avantageuse, ledit film de polymère acrylique est obtenu à partir de deux émulsions ou dispersions aqueuses de grades de rigidité différents en mélange.

Plus particulièrement, sa composition est la suivante :
- une émulsion ou dispersion de polymère acrylique souple,
- une émulsion ou dispersion de polymère acrylique rigide,
- un épaississant,
- un agent mouillant,
- un agent de tension de surface,
- un antimousse,
- un cosolvant ou agent de coalescence,
- des stabilisants UV,
- des pigments ou colorants.

De préférence et plus particulièrement encore, pour satisfaire les propriétés requises de classement au feu et de toxicité réduite à la combustion, ledit complexe multicouche présente :
- 1 à 15% en poids ou en épaisseur de dit film de polymère fluoré, et
- 50 à 75% en poids ou en épaisseur de dit film de polymère acrylique, et
- 10 à 30% en poids ou en épaisseur de dites première et deuxième couches d'adhésif (les 2 couches étant donc cumulées).

Selon un autre mode de réalisation, le dit polymère non halogéné de film de support de décoration est un polyuréthane.

Plus particulièrement, pour satisfaire les propriétés requises de classement au feu des toxicités réduites à la combustion, ledit complexe multicouche présente :
- 10 à 30% en poids ou en épaisseur de dit film de polymère fluoré, et
- 20 à 50% en poids ou en épaisseur de dit film de polymère polyuréthane, et
- 20 à 60% en poids ou en épaisseur de dites première et deuxième couches d'adhésif.

Plus particulièrement, selon une caractéristique avantageuse, ledit film support de polymère non halogéné est un film obtenu par enduction, présentant des propriétés d'allongement identiques dans les deux dimensions de longueur et largeur.

Pour des raisons de souplesse industrielle, on réalise de préférence une enduction sur papier transfert. Cette solution permet de réaliser des quantités plus petites qui sont plus appropriées au marché des films anti-graffiti pour véhicules roulants. Le polymère acrylique est donc formulé sous la forme d'une composition liquide déposée sur papier transfert, séchée puis retirée du papier pour récupérer le film désiré.

De préférence, la composition liquide est une émulsion ou dispersion en phase aqueuse plutôt qu'une solution en milieu solvant pour des raisons écologiques.

Pour obtenir les propriétés d'allongement requises dudit complexe, selon d'autres caractéristiques préférées :
- la force de traction dudit film de polymère fluoré anti-graffiti, pour obtenir un allongement de 20%, est inférieure ou égale à 1 000 N/m, de préférence inférieure ou égale à 800 N/m, et
- la force de traction dudit film de polymère non halogéné du support de décoration, pour obtenir un allongement de 20%, est inférieure ou égale à 1 500 N/m, de préférence inférieure ou égale à 1 000 N/m, et de préférence encore un allongement à la rupture supérieur à 100%.

Ces propriétés d'allongement correspondent à un module de traction, encore appelé module de Young, selon les normes NF EN ISO5271 et ASTM D638 inférieur à 400 MPa.

De préférence, ledit adhésif de ladite deuxième couche est un adhésif sensible à la pression et de préférence enlevable.

On entend ici par :
- "sensible à la pression", un adhésif n'atteignant ses propriétés adhésives définitives qu'après avoir été pressé sur la surface d'application; et
- "enlevable", un adhésif pelable sur ladite surface de l'objet, notamment pelable par une force de pelage inférieure à 50 N/inch (2000 N/m), de préférence inférieure à 30 N/inch (1200 N/m). Ainsi le film présente une force d'adhésion suffisante pour ne pas se décoller seul de son support, ou par un frottement occasionné par un passager. Et, sa force d'adhésion n'est pas trop forte pour qu'il puisse être enlevé par des professionnels une fois dégradé.

Les propriétés adhésives, c'est-à-dire la capacité de l'adhésif à créer une liaison par interaction entre son support (à savoir le film plastique) et la surface de l'objet à coller se caractérisent par trois grandeurs : la mouillabilité, le pelage et l'accroche instantanée ou "tack".

La mouillabilité représente la capacité d'étalement de l'adhésif déposé sur le film avec la surface de l'objet à coller. La mouillabilité doit être la plus forte possible pour que le contact entre la surface à coller et l'adhésif soit le plus important.

Le pelage représente la capacité de l'adhésif à adhérer donc rester sur la surface de l'objet et du film plastique après avoir été pressé convenablement. Le pelage est par exemple déterminé selon la norme ASTM D-1000-78 qui consiste à mesurer la force (en N/inch) nécessaire pour arracher un ruban adhésif d'un support normé. Plus cette force sera importante, plus l'adhésif accrochera au support (elle dépend, entre autres, de la quantité et de la nature d'adhésif déposé en g/m2). Si une partie de l'adhésif reste sur la surface à coller après avoir été retiré, on parle de rupture cohésive ou de transfert d'adhésif ce qui généralement n'est pas désiré. Il peut donc être avantageux de mettre en oeuvre un adhésif temporaire pour pouvoir renouveler la protection anti-grafitti quand le film anti-grafitti n'est plus opérant.

Le "tack" représente l'accroche instantanée sur le support. Il est mesuré à l'aide d'une méthode normée similaire à la précédente, par exemple l'ASTM D 907-82 (1985). Elle mesure toujours une force en N/inch qui doit être assez forte pour que l'adhésif ait une accroche immédiate au support. La méthode de mesure consiste à mettre en contact un film adhésif avec une surface en verre de la même largeur que le film. Généralement la surface de contact entre le film et le verre est de 1 inch², soit 6,5.10⁻⁴ m². Il s'agit ensuite de retirer immédiatement ce film à l'aide d'un dynamomètre en mesurant la force nécessaire au décollement.

Les adhésifs sensibles à la pression permanents et enlevables sont connus (Handbook of pressure sensitive adhesive, Ed. D. Satas, Van Nostran Neinhold, New York 2nd Ed (1989)). Il s'agit principalement d'élastomères présentant des propriétés adhésives. Pour être enduit sur le film plastique, l'adhésif doit se présenter sous forme fluide. Les différents moyens suivants sont utilisés pour transformer l'élastomère collant en produit fluide applicable :
- une solubilisation de l'élastomère dans un solvant. On parle alors d'adhésifs en phase solvants.
- une dispersion de l'élastomère dans l'eau grâce à l'addition d'agents tensioactifs. On parle alors d'adhésifs en phase aqueuse. L'agent tensioactif n'étant pas éliminé lors de l'enduction, il reste dans l'adhésif et provoque une sensibilité à l'humidité souvent indésirable.
- une liquéfaction de l'élastomère à haute température pour des adhésifs dits "hotmelt" ou calandrables. Ce type de produits nécessite des systèmes d'enduction spécifiques et plus coûteux.
- une fonctionnalisation et une solubilisation de l'élastomère dans des monomères réactifs dans le cas d'adhésifs réticulables UV. Il s'agit d'une technologie encore plus coûteuse.

On entend ici par élastomère, un polymère «élastique» qui supporte de très grandes déformations (supérieures à 100%), lesquelles sont, au moins en partie, réversibles.

Les élastomères sont classés en trois catégories : les caoutchoucs naturels, les caoutchoucs synthétiques et les polyacrylates. Les caoutchoucs, qu'ils soient naturels ou synthétiques ont l'avantage de présenter une accroche immédiate importante, mais ils s'oxydent facilement, ce qui conduit à une diminution de leur pouvoir adhésif dans le temps. Des exemples de caoutchoucs synthétiques sont les copolymères Styrène/Butadiène/Styrène (SBS) et Styrènes/Isoprène / Styrène (SIS). Les élastomères polyacrylates ont une accroche immédiate plus faible, mais leur adhésion est importante et reste stable, voir augmente dans le temps.

Avantageusement encore, lesdites couches d'adhésif sont constituées d'adhésif de type polyacrylique.

Plus particulièrement encore, la quantité globale d'adhésif desdites première couche et deuxième couche d'adhésif représente une proportion pondérale inférieure ou égale à 60% du poids dudit complexe et, de préférence, est de 20 à 75 g/m².

De préférence encore, ladite première couche d'adhésif présente un grammage inférieur ou égal à 40 g/m² et une force d'adhésion sur verre supérieure à 500 N/m, et ladite deuxième couche d'adhésif présente un grammage inférieur ou égal à 50 g/m² et une force d'adhésion sur verre inférieure à 2000 N/m, de préférence inférieure à 1200 N/m.

Ces quantités respectives de couche d'adhésif permettent d'obtenir une adhésion fiable pour :
- empêcher la délamination du complexe multicouche, mais, toutefois, sans risque de fluage après adhésion grâce à la première couche d'adhésif ainsi défini ; et
- enlever le complexe de son support grâce à la deuxième couche d'adhésif ainsi défini.

Dans un mode de réalisation particulier, ledit polymère fluoré anti-graffiti est choisi parmi le poly(fluorure de vinyl) (PVF), le poly(fluorure de vinylidène) (PVDF), le polyéthylène tétrafluoroéthylène (ETFE), le polyéthylène propylène fluoré (FEP), un copolymère perfluoroalcoxy (PFA) et le polychlorotrifluoroéthylène (ETCFE).

De préférence, ledit polymère fluoré est l'ETFE de préférence, ayant subi un traitement chimique améliorant son adhésion sur une face, à savoir sur la face destinée à être au contact de l'adhésif. Ce traitement peut être de type plasma, corona, rayons gamma ou chimique tel qu'un traitement selon la méthode à l'ammoniaque liquide.

L'ETFE présente l'avantage de propriétés de transparence et de souplesse élevées.

Selon une autre caractéristique particulière avantageuse :
- l'épaisseur globale du complexe est de 50 à 500 µm, et
- l'épaisseur dudit film de fluoropolymère en surface est inférieure à 50 µm, de préférence inférieure à 25 µm.

Dans un mode préféré de réalisation, ladite deuxième couche d'adhésif est appliquée sur un liner de protection temporaire, comprenant une couche de papier ou film polymère revêtu d'une couche antiadhésive, de préférence ledit liner étant une feuille de papier revêtue d'une couche de silicone.

Le liner est protecteur de l'adhésif, sa surface peut être lisse, embossée ou structurée.

Le liner, appelé plus couramment "liner antiadhésif" ("release liner"), est un second film non collant ou de préférence une feuille de papier revêtue d'une couche antiadhésive, notamment une couche de polymère tel que polysiloxane ou polymère fluoré destiné à recouvrir et donc protéger la couche d'adhésif à la surface du dit film plastique avant son application. Bien qu'il soit séparé du film plastique autoadhésif après la pose, la qualité du liner influence la qualité du film autoadhésif collé. Par exemple l'emploi d'un liner structuré facilite la pose du film, réduit le nombre de bulles créées entre le film et l'objet et améliore ainsi la qualité de surface du film autoadhésif posé. De même, un liner dont le dos à une structure rugueuse transfère par pression sa rugosité à la surface du film autoadhésif lors de son enroulement, modifiant ainsi ses propriétés de surface. Le liner est sélectionné en tenant compte des paramètres suivants :
L'effet de non adhérence ("release"), c'est-à-dire non collant, doit être adapté à la nature de l'adhésif du film autoadhésif. Une valeur de force de décollement ("release") trop élevée complique le décollement du film autoadhésif. Si elle est trop faible, le film risque de tomber. D'une manière générale, la valeur de la force de décollement doit être comprise entre 0,5 et 2 N/inch (entre 20 et 80 N/m), de préférence de 0,8 à 1,2 N/inch (de 30 à 50 N/m). L'effet de décollement est apporté par une couche anti adhérente de polysiloxane, le liner étant alors dénommé papier siliconé, ou plus rarement d'un polymère fluoré. La couche anti adhésive a en général une épaisseur inférieure à 2 micromètres.

Le corps du liner apporte la stabilité dimensionnelle au film autoadhésif avant usage. Sa qualité de surface est importante car sa structure va s'imprimer par pression sur le film autoadhésif lors de l'enroulement de la bobine. Il existe différents corps de liner qui sont :
- des papiers kraft et glassine calandrés qui représentent la grande majorité des liners disponibles. Ils sont utilisés dans la plupart des applications. Leur défaut principal est un état de surface de type papier qui peut marquer la surface du média. De plus leur sensibilité à l'humidité peut provoquer des gondolements du papier. Pour diminuer cet effet, certains papiers pour liner sont revêtus d'une couche comprenant des particules d'argile, on parle alors de "clay coated papers",
- des papiers revêtus d'une couche de polyéthylène sur une ou les deux faces (PE/papier/PE). Il s'agit d'un complexe ayant pour but de diminuer la sensibilité du liner à l'eau. La présence du PE en dorsale du papier améliore également la glissance des films et facilitent leur enroulement. Une couche anti adhérente du type polysiloxane du coté de la couche d'adhésif du film plastique reste toutefois requise,
- des films polyesters ou plus précisément des PET peuvent être utilisés pour protéger les films auto adhésifs nécessitant une parfaite transparence, par exemple pour des films destinés à la protection de vitrages.

Le liner anti adhésif de protection représente (y compris sa couche anti-adhérente) un grammage de 50 à 200 g/m², de préférence de 80 à 150 g/m².

Le film plastique autoadhésif selon l'invention et le liner antiadhésif sont conditionnés sous la forme de bobines de longueurs enroulées de 1 à 5 000 m et de largeur de 615 à 2 000 mm.

L'application de l'adhésif sur le film plastique autoadhésif se fait par enduction consistant à déposer la couche d'adhésif avec une épaisseur contrôlée sur le film avant de la protéger avec le liner. On distingue en général deux modes de production connus:
- l'enduction directe : l'adhésif est directement déposé sur le film à adhésiver puis séché. C'est la méthode la plus simple à mettre en oeuvre.
- L'enduction par transfert : la méthode précédente présente des risques sur des films à sensibilité thermique trop importante. L'étape de séchage de l'adhésif, postérieur à l'enduction, serait susceptible de déformer le film. Dans ce cas, on préfère une enduction par transfert.

La présente invention fournit également une méthode d'utilisation d'un film autoadhésif selon l'invention, dans laquelle on applique ledit film sur une surface tridimensionnelle d'un objet, de préférence destiné à être exposé à l'extérieur, de préférence encore un véhicule ferroviaire.

De par son caractère autocollant, la pose du film et donc la protection anti-grafitti de surface peut être mis en oeuvre aisément par un personnel non qualifié ou un particulier sans équipement spécifique. De même, le film peut être retiré aussi aisément qu'il a été posé, et remplacé toujours sans matériel spécifique, notamment pour renouveler la protection lorsque le film anti-grafitti n'est plus fiable.

Les applications visées selon la présente invention sont plus particulièrement la protection de toutes les surfaces localisées dans des lieux exposés au public et qui ne peuvent pas être suffisamment fréquemment nettoyés, notamment sur les véhicules de transport public.

Avantageusement, le film autoadhésif comprend en outre des colorations ou impressions de décor ou de texte, sur ledit film support de décoration, visibles sur sa surface externe à travers le film anti-grafitti.

Il peut ainsi en outre servir de support de décoration et/ou de communication. Il peut par exemple remplacer les peintures, notamment peintures murales et papiers peints. Si la décoration ou l'élément visuel de communication deviennent surannés, le film peut être aisément et régulièrement remplacé.

Des films auto adhésifs de ce type, mais n'incorporant pas de protection anti-grafitti, sont connus dans les domaines de la décoration, de la communication et un très grand nombre d'autres applications, telles que dans le domaine mobilier avec des films de laminage donnant un effet bois ou autre effet décoratif.

Les films auto adhésifs à usages décoratifs sont des supports colorés, écrits ou imagés, disposant sur leur face intérieure d'une couche d'adhésif permettant de les fixer sur une surface, à titre temporaire ou définitif. Tant que l'autocollant n'est pas apposé, la partie adhésive est couverte par une protection appelée liner. Lorsque les films sont colorés, ils servent généralement à la décoration de surfaces. Ils peuvent être découpés grâce à la méthode de Découpe Assistée par Ordinateur (D.A.O.) pour réaliser des formes ou des lettres. Ils sont généralement destinés à être imprimés ou sérigraphiés pour servir d'étiquettes et d'affiches publicitaires. Ils remplacent aujourd'hui la peinture dans bon nombre d'applications telles que les surfaces intérieures et extérieures de transports en commun (trains, métros, bus, tramways). Ils sont considérés comme des supports publicitaires destinés à être apposés pendant de longues durées.

Dans un mode de réalisation particulier d'une méthode de protection anti-graffiti d'une grande surface d'un objet, on réalise les étapes suivantes, dans lesquelles :
1/ on dépose, sur la surface de l'objet à protéger, un complexe selon l'invention, comprenant un film autoadhésif dont la face interne revêtue d'adhésif est appliquée sur un liner de protection temporaire, de manière à découper le complexe grossièrement, c'est-à-dire à des dimensions quelque peu supérieures aux dimensions exactes de la surface de l'objet à protéger; et
2/ on retire une partie du liner pour dégager une partie de la face revêtue d'adhésif du film autoadhésif, ladite partie formant, par exemple, une bande; puis
3/ on colle ladite bande de film autoadhésif en exerçant une pression sur la face externe dudit film contre la surface à protéger, de manière à ce que l'adhésif adhère sur ladite surface de l'objet et que le film en épouse complètement les contours, éventuellement non plans; et
4/ le cas échéant, on tire, simultanément à l'étape 3/, sur l'extrémité libre du complexe, la partie du liner retirée étant située entre la surface à protéger et la partie restante du complexe; et
5/ le cas échéant, notamment pour que le film autoadhésif dégagé du liner épouse bien les parties non planes de la surface à protéger, de préférence on exerce la pression sur la face externe du film à l'aide d'une raclette que l'on déplace pour coller le film en chassant l'air et évitant ainsi la formation de bulle entre le film à coller et la surface de l'objet à protéger par ledit film; et
6/ on répète les étapes 2/ à 5/ jusqu'à ce que la surface de l'objet à protéger soit entièrement revêtue du film autoadhésif collé sur ladite surface; et
7/ on découpe le film aux dimensions exactes de ladite surface à protéger, après que la surface de l'objet à protéger soit entièrement revêtue du film autoadhésif collé sur ladite surface.

Pour des petites surfaces, on peut enlever entièrement le liner à l'étape 2/ et, aux étapes 3/ et suivantes, encoller tout d'abord une partie seulement du film autoadhésif sur une partie de la surface à protéger, pour appliquer ensuite le reste du film progressivement, le cas échéant à l'aide d'une raclette, comme explicité ci-dessus.

Avantageusement, notamment dans le cas de grandes surfaces, il est possible de retirer complètement le liner et de mouiller la face interne revêtue d'adhésif du film autoadhésif, de manière à pouvoir la laisser reposer sur la surface à protéger sans qu'elle y adhère avant qu'une pression ait été exercée, notamment à l'aide d'une raclette comme explicité ci-dessus.

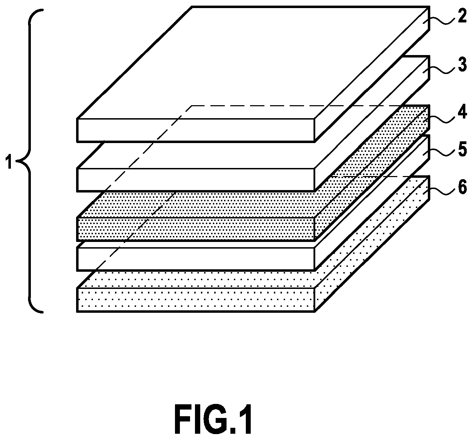

D'autres caractéristiques et avantages de la présente invention ressortiront mieux à la lecture de la description qui va suivre, faite de manière illustrative et non limitative, en référence aux figures 1 à 3 dans lesquelles :
la figure 1 représente schématiquement différentes couches et films d'un film autoadhésif selon la présente invention,
les figures 2-1 à 2-6 représentent l'application d'un film autoadhésif selon l'invention sur une surface plane, et
les figures 3-1 à 3-6 représentent l'application d'un film selon l'invention sur des surfaces non planes, telles qu'une carrosserie d'automobile (figures 3-1 à 3-6).

### Exemple 1 :

Un film acrylique de couleur blanche est réalisé à partir d'émulsions aqueuses acryliques de grade rigide Alberdingk® AC 25381 et de grade souple Alberdingk® AC 2544. La composition liquide comprend les composants et adjuvants décrits au tableau 1. Cette composition est coulée par enduction sur papier transfert Sappi Ultracast Universal Patent à l'aide d'une racle de manière à atteindre une masse surfacique finale du film acrylique de 142 g/m² et une épaisseur de 100 µm après séchage, le film étant séché dans un four à une température supérieure à 100°C.

**Tableau 1 : Composition du film acrylique de l'exemple 1**

| **Nom** | **Fournisseur** | **Type** | **Quantité (%)** |
|---|---|---|---|
| AC-25381 | Alberdingk Boley | Emulsion acrylique | 60,0 |
| AC-2544 | Alberdingk Boley | Emulsion acrylique | 16,0 |
| Aquis® White 0062 | Heubach | Pâte pigmentaire blanche | 15,0 |
| Tinopal® NFW | Ciba | Azurant optique | 2,00 |
| BLS® 292 | Mayso | Capteur de radicaux | 2,00 |
| Hostavin® 3310 | Clariant | Absorbeur UV | 2,00 |
| Tego Wet® 270 | Evonik | Agent mouillant | 1,0 |
| Acrysol® RM 2020 | Rohm & Haas | Epaississant | 2,0 |
| Byk® 024 | Byk | Anti-mousse | 0,5 |
| Tego Glide® 100 | Evonik | Agent glissant | 0,5 |
| **Total** | | | **100,00** |

Une couche de dit deuxième adhésif acrylique de 26 g/m² et environ 25 µm est déposé sur le film de polymère acrylique dans une seconde machine puis séché et laminé avec un papier siliconé de 135 g/m². Le papier d'enduction utilisé lors de la première étape est retiré pour être réutilisé.

Le complexe ainsi obtenu est, à nouveau, enduit de 24 g/m² d'une couche de dit premier adhésif de 23 µm sur la face du film acrylique libérée du papier d'enduction, séché à une température supérieure à 100°C puis laminé sur une face traitée chimiquement d'un film ETFE de 22 g/m² et 13 µm d'épaisseur. La face du film ETFE revêtue du dit premier adhésif a subi un traitement d'adhésion réalisé par le fabricant. La masse surfacique totale du complexe est alors de 214 g/m² pour une épaisseur globale de 161 µm hors papier siliconé.

Les deux couches adhésives mises en oeuvre sur le complexe assurent son adhésion et sa stabilité.

| | | | | |
|---|---|---|---|---|
| film anti-graffiti | 22 g/m² | 10,3% | 13 µm | 8,1% |
| film acrylique | 142 g/m² | 66% | 100 µm | 62,1% |
| 1er adhésif | 24 g/m² | 11,2% | 23 µm | 14,3% |
| 2ème adhésif | 26 g/m² | 12,2% | 25 µm | 15,5% |

La première couche d'adhésif située à l'interface entre le film de protection anti-graffiti ETFE de surface et le film de support de décoration de polymère polyacrylique sert à assurer la stabilité du film ETFE. Elle ne doit pas jaunir lorsque exposée en extérieur car elle est la première à recevoir la lumière après le film ETFE qui est transparent aux UV. Son jaunissement entrainerait une modification de la couleur du complexe et donc une dégradation visuelle du produit. Elle doit également suffisamment adhérer sur la face du film d'ETFE et sur le film acrylique pour empêcher toute délamination du complexe. On a utilisé un adhésif acrylique phase solvant fourni par la société Cytec sous le nom de GMS 2835 déposé à raison de 24 g/m² de masse surfacique sur le film acrylique et dont la force d'adhésion sur verre est de 23 N/inch soit environ 900N/m.

La seconde couche d'adhésif située sous le film de support de décoration de polymère acrylique sert à faire adhérer le complexe ou film autoadhésif anti-graffiti sur le support. Il est important que sa force d'adhésion soit importante aussi bien sur le support que sur le film acrylique afin que la tension imposée au film lors de sa pose sur une surface courbe ne provoque pas son décollement. On a choisi également un adhésif acrylique phase solvant sensible à la pression fourni par la société Cytec sous le nom de GMS 3101 déposé à raison de 26 g/m² de masse surfacique sur le film acrylique et dont la force d'adhésion sur verre est de 25 N/inch soit environ 1000 N/m.

La force de résistance du film de protection d'ETFE, à un allongement de 20%, est de 335 N/m.

La force de résistance du film de polymère acrylique à un allongement de 20% est de 441 N/m. C'est en ajustant le ratio entre polymère souple et polymère rigide que l'on règle la souplesse du film acrylique.

La force de résistance du film autoadhésif anti-graffiti obtenu à un allongement de 20% est de 874 N/m et son élongation à la rupture, supérieure à 100%, notamment de 140%, prouve son aptitude à suivre le contour d'un objet tridimensionnel.

La capacité du produit à respecter les normes NF 31-112, NF P 92-101 et NF F 16-101 a été analysée par des laboratoires certifiés,- Le produit est classé G0, M1 et F4 -lorsqu'il est posé sur plaque d'aluminium. La conformabilité du film et son aptitude à suivre le contour d'une surface tridimensionnelle sont attestées par la pose du produit à température ambiante sur un élément incurvé de porte de train et sur une carrosserie d'automobile.

Le comportement du film se caractérise par les valeurs suivantes :
- l'indice de toxicité conventionnel des fumées (ITC) est de 194, la densité optique spécifique maximale (Dm) est de 41 et la valeur d'obscurcissement due à la fumée au cours des 4 premières minutes de l'essai est de 106. L'indice de fumée est alors de IF = 41/100 + 106/30 + 194/2, soit IF = 101, soit un classement F4.
- le produit ne s'enflamme pas lors de son exposition au rayonnement, il est classé M1.
- les écarts colorimétriques moyens (delta E) donnés dans l'espace CIE 1976 (L*, a*, b*) après application et nettoyage des graffiti avec un produit non étiqueté selon la norme NF F 31-112, sont tous inférieurs ou égaux à 1. Le produit est donc classé G1.

### Exemple 2 :

Un film acrylique de couleur blanche est réalisé à partir d'un mélange de deux émulsions aqueuses acryliques de grades de rigidité différents Neocryl® A-1120 et Neocryl® A-2091. La composition liquide de l'émulsion formulée selon le tableau 2 ci-après est déposée sur papier transfert Sappi Ultracast Universal Patent à l'aide d'une racle de manière à atteindre une masse surfacique finale du film acrylique de 213 g/m² pour une épaisseur de 150 µm après séchage. Le film est séché dans un four à une température supérieure à 100°C.

**Tableau 2 : Composition du film acrylique de l'exemple 2**

| **Nom** | **Fournisseur** | **Type** | **Quantité (%)** |
|---|---|---|---|
| Neocryl® A-1120 | DSM Neoresin | Emulsion acrylique | 63,0 |
| Neocryl® A-2091 | DSM Neoresin | Emulsion acrylique | 10,6 |
| Luconyl® NG White 0022 | BASF | Pâte pigmentaire blanche | 15,0 |
| Tinopal® NFW | Ciba | Azurant optique | 2,00 |
| Hostavin® 3070 | Clariant | Capteur de radicaux | 2,00 |
| Tinuvin® 400 | Ciba | Absorbeur UV | 2,00 |
| Tego Wet®E270 | Evonik | Agent mouillant | 1,0 |
| Acrysol® RM 8 | Rohm & Haas | Epaississant | 2,0 |
| Byk® 022 | Byk | Anti-mousse | 0,2 |
| Tego Glide® 482 | Evonik | Agent glissant | 0,2 |
| Dowanol® DPnB | Dow | Cosolvant | 2,0 |
| **Total** | | | **100,00** |

Une dite deuxième couche adhésif acrylique sensible à la pression de la société Cytec sous la référence GMS 3101 de 35 g/m² est déposé sur ce film acrylique dans une seconde machine puis séché et laminé avec un papier siliconé de 135 g/m². La deuxième couche d'adhésif présente ainsi une épaisseur 33 µm après séchage. Le papier d'enduction utilisé lors de la première étape est retiré pour être réutilisé.

Le complexe ainsi obtenu est à nouveau enduit de 25 g/m² de dite première couche d'adhésif acrylique de la société Cytec sous la référence GMS 2835 sur la face du film acrylique libérée du papier d'enduction, séché à une température supérieure à 100°C puis laminé sur une face du même film ETFE de 22 g/m² et 13 µm d'épaisseur. La première couche d'adhésif présente ainsi une épaisseur 27 µm après séchage. La masse surfacique totale du complexe est alors de 295 g/m² pour une épaisseur globale de 223 µm hors papier siliconé.

| | | | | |
|---|---|---|---|---|
| film anti-graffiti | 22 g/m² | 7,5% | 13 µm | 5,8% |
| film acrylique | 213 g/m² | 72% | 130 µm | 58,3% |
| 1er adhésif | 25 g/m² | 8,5% | 27 µm | 12,1% |
| 2ème adhésif | 35 g/m² | 12% | 33 µm | 14,8% |

La force de résistance du film de protection d'ETFE à un allongement de 20% est de 335 N/m.

La force de résistance du film de polymère acrylique à un allongement de 20% est de 590 N/m.

Le produit ainsi obtenu est classé G0, M1 et F3 lorsqu'il est posé sur plaque d'aluminium et possède des propriétés d'allongement similaires à celles du produit de l'exemple 1.

### Exemple 3 :

Un film polyuréthane de couleur bleue est réalisé à partir d'une dispersion aqueuse de polyuréthane vendue par BAYER sous le nom d'Impranil® DLF. La composition liquide de la dispersion formulée selon le tableau 2 ci-après est déposée sur papier transfert Sappi Ultracast Universal Patent à l'aide d'une racle de manière à atteindre une masse surfacique finale du film polyuréthane de 30 g/m² pour une épaisseur de 30 µm après séchage. Le film est séché dans un four à une température supérieure à 100°C. Une dite deuxième couche d'adhésif sensible à la pression de masse surfacique de 24g/m² est déposé sur ce film polyuréthane dans une seconde machine puis séché et laminé avec un papier siliconé de 135 g/m². La deuxième couche d'adhésif présente ainsi une épaisseur de 21 µm. Le complexe ainsi obtenu est de nouveau enduit de 24g/m² du même adhésif acrylique sensible à la pression sur la face du film polyuréthane libérée du papier d'enduction, séché à une température supérieure à 100°C puis laminé sur une face du même film ETFE de 22 g/m² et 13 µm d'épaisseur. La première couche d'adhésif présente ainsi une épaisseur de 21 µm après séchage. Les premier et deuxième adhésifs étaient identiques à ceux des exemples 1 et 2. La masse surfacique totale du complexe est alors de 100 g/m² pour une épaisseur globale de 85 µm hors papier siliconé.

| | | | | |
|---|---|---|---|---|
| film anti-graffiti | 22 g/m² | 22% | 13 µm | 15,3% |
| film polyuréthane | 30 g/m² | 30% | 30 µm | 35,3% |
| 1er adhésif | 24 g/m² | 24% | 21 µm | 24,7% |
| 2ème adhésif | 24 g/m² | 24% | 21 µm | 24,7% |

La force de résistance du film de protection d'ETFE à un allongement de 20% est de 8,5 N/inch soit 335 N/m. La force de résistance du film polymère polyuréthane à un allongement de 20% est de 13 N/inch soit 512 N/m. Le produit ainsi obtenu est classé G1, M1 et F3 lorsqu'il est collé sur une plaque d'aluminium et possède des propriétés d'allongement similaires à celles de celui de l'exemple 1, à savoir une force de résistance à un allongement de 20% de 23 N/inch soit 906 N/m, et un allongement à la rupture de 170%.

Le complexe obtenu ne s'enflamme pas lors de l'essai par rayonnement réalisé selon la norme NF P 92-501 et est donc classé M1.

Son indice de toxicité conventionnel des fumées (ITC) est de 145, sa densité optique spécifique maximale (Dm) est de 72 et la valeur d'obscurcissement due à la fumée au cours des 4 premières minutes de l'essai est de 96. L'indice de fumée est alors de IF = 72/100 + 96/30 + 145/2, soit IF = 77, soit un classement F3.

Les écarts colorimétriques moyens (delta E) donnés dans l'espace CIE 1976 (L*, a*, b*) après application et nettoyage des graffiti avec un produit non étiqueté selon la norme NF F 31-112, sont tous inférieurs ou égaux à 1. Le produit est donc classé G1.

**Tableau 3 : composition de la formulation de film polyuréthane de l'exemple 3**

| **Nom** | **Fournisseur** | **Type** | **Quantité (%)** |
|---|---|---|---|
| Impranil DLF | BAYER | Emulsion acrylique | 75,8 |
| Pâte pigmentaire Bleue | PDM | Pâte pigmentaire Bleue | 15,0 |
| Tinopal® NFW | Ciba | Azurant optique | 2,00 |
| Hostavin® 3070 | Clariant | Capteur de radicaux | 2,00 |
| Tinuvin® 400 | Ciba | Absorbeur UV | 2,00 |
| Tego Wet® 270 | Evonik | Agent mouillant | 1,0 |
| Acrysol® RM8 | Rohm & Haas | Epaississant | 2,0 |
| Byk®022 | Byk | Anti-mousse | 0,2 |
| **Total** | | | **100,00** |

### Exemple 4 : protection d'objet

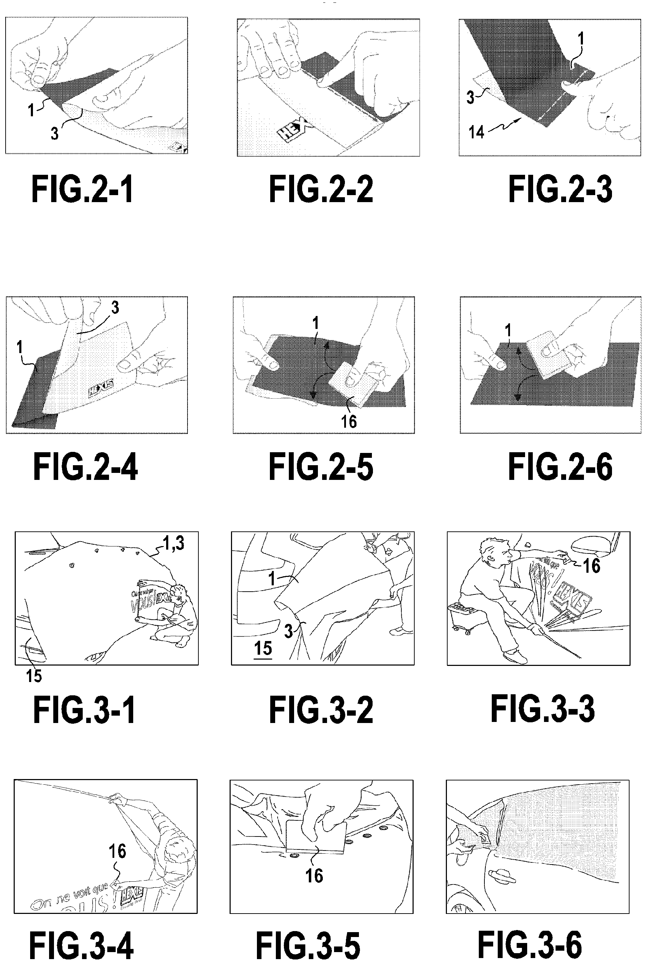

1. La protection d'un objet dont la surface est plane est représentée sur les figures 2-1 à 2-6. Un film autoadhésif anti-graffiti est déposé sur une surface 14. Dans un premier temps (figure 2-1), une partie du liner 3 est retirée du film autoadhésif 1 sur une bande de quelques centimètres. La partie de liner ainsi dégagée est ensuite pliée sur toute sa largeur (figure 2-2) de manière à ne laisser que ladite bande de film à découvert. Cette bande est déposée (figure 2-3) sur la surface à protéger 14 en exerçant une pression sur la face externe du film autoadhésif à coller, de manière à ce que l'adhésif adhère complètement sur ladite surface. Le liner 3 est ensuite progressivement retiré en tirant sur la partie de liner décollée, celle-ci étant placée entre le film et la surface de l'objet non encore protégée. Puis, on applique la partie de film autoadhésif ainsi dégagée du liner contre la surface à protéger, comme explicité ci-après. On exerce une pression sur le film autoadhésif à coller en le plaquant contre la surface à protéger avec une raclette 16 et en déplaçant la raclette par-dessus le film, sur sa face externe, depuis la partie collée vers la partie non encore collée du film, de manière à chasser l'air pour éviter la formation de bulles d'air entre le film et la surface à protéger (figure 2-5 et 2-6).
2. La protection d'un objet 15 à surface courbée spécialement complexe est représentée sur les figures 3-1 à 3-6. L'objet 15 en question est une carrosserie d'un véhicule roulant. Le film autoadhésif 1 et son liner 3 sont déposés sur l'objet à protéger de manière à prendre ses dimensions exactes (figure 3-1). Il est grossièrement découpé, progressivement retiré de son liner et appliqué sur l'objet 15 de la même manière que décrite sur la figure 2-5 en collant une bande de quelques centimètres de film autoadhésif (figure 3-2). L'enrobage des surfaces légèrement courbes est obtenu en tirant sur l'extrémité libre du film autoadhésif complexé au liner, après avoir retiré une partie du liner, la partie déjà collée supportant l'ensemble du film à l'autre extrémité (figure 3-3). Lorsqu'une partie du film est parfaitement posée, une pression est exercée sur le film pour assurer son adhésion sur la surface courbe (figure 3-4), le cas échéant en tirant simultanément l'extrémité libre du film complexé au liner, l'emploi d'une raclette en plastique mou 16 facilite cette opération (figure 3-4 et 3-5). Enfin, lorsque toute la surface dudit objet est recouverte, le film est découpé plus précisément (figure 3-6).

## Revendications

1. Film autoadhésif multicouche de protection anti-graffiti comprenant un complexe multicouche (1) consistant dans :
- une couche de protection anti-graffiti en surface constituée d'un film de polymère fluoré transparent (2), et
- une première couche d'adhésif de polymère non halogéné transparent (3) et
- un film de support de décoration constitué d'un polymère non halogéné (4), et
- une deuxième couche d'adhésif sensible à la pression de polymère non halogéné (5),
ledit complexe multicouche présentant des propriétés le rendant apte à être étirable manuellement à température ambiante de 0 à 35°C, de préférence de 15 à 25 °C, pour être appliqué sur un support de surface tridimensionnelle, des propriétés d'allongement telles que la force de traction dudit complexe multicouche, pour obtenir un allongement de 20%, est inférieure ou égale à 2 000 N/m, allongement et force de traction étant mesurés selon les normes NF EN 1940 et 1941.

2. Film autoadhésif multicouche selon la revendication 1, **caractérisé en ce que** ledit complexe multicouche présente une épaisseur de 50 à 500 µm et un allongement à la rupture supérieur à 100% avec une résistance à la traction inférieure à 6 000 N/m, allongement et force de traction étant mesurés selon les normes NF EN 1940 et 1941.

3. Film autoadhésif multicouche selon la revendication 1 ou 2, **caractérisé en ce que** ledit complexe multicouche présente des propriétés de résistance au feu et de toxicité réduite à la combustion, telles que ledit film est classé au moins M1 selon la norme française de réaction au feu NF P 92-501 et au moins F4, de préférence au moins F3, selon la norme française de toxicité des fumées NF F 16-101 et les méthodes NF X 70-100 et NF X 10-702, et des propriétés de protection anti-graffiti classées au moins G1, de préférence G0, selon la norme française NF F 31-112.

4. Film autoadhésif multicouche selon l'une des revendications 1 à 3, **caractérisé en ce que** ledit complexe multicouche comprend :
- moins de 30% en poids ou en épaisseur de dit film de polymère fluoré anti-graffiti, et
- plus de 70% en poids ou en épaisseur de dit polymère non halogéné, à titre de film de support de décoration, et dites première et deuxième couches d'adhésif.

5. Film autoadhésif multicouche selon l'une des revendications 1 à 4, **caractérisé en ce que** ledit film de support de décoration de polymère non halogéné est un film obtenu par enduction, ledit polymère non halogéné étant choisi parmi un polyuréthane ou un polymère ou copolymère comprenant au moins des monomères vinyliques choisis parmi les monomères vinyl, vinylacétate et acrylate.

6. Film autoadhésif multicouche selon l'une des revendications 1 à 5, **caractérisé en ce que** ledit polymère non halogéné du film de support de décoration (4) est un polymère acrylique.

7. Film autoadhésif multicouche selon la revendication 6, **caractérisé en ce que** ledit complexe multicouche présente :
- 1 à 15% en poids ou en épaisseur de dit film de polymère fluoré, et
- 50 à 75% en poids ou en épaisseur de dit film de polymère acrylique, et
- 10 à 30% en poids ou en épaisseur de dites première et deuxième couches d'adhésif.

8. Film autoadhésif multicouche selon l'une des revendications 1 à 5, **caractérisé en ce que** le dit polymère non halogéné de film de support de décoration est un polyuréthane (4).

9. Film autoadhésif multicouche selon la revendication 8, **caractérisé en ce que** ledit complexe multicouche présente :
- 10 à 30% en poids ou en épaisseur de dit film de polymère fluoré, et
- 20 à 50% en poids ou en épaisseur de dit film de polymère polyuréthane, et
- 20 à 60% en poids ou en épaisseur de dites première et deuxième couches d'adhésif.

10. Film autoadhésif multicouche selon l'une des revendications 1 à 9, **caractérisé en ce que** le film de couche de protection anti-graffiti et le film support de décoration présentent des force de traction et allongement qui suivent, mesurés selon les normes NF EN 1940 et 1941
- la force de traction dudit film de polymère fluoré anti-graffiti, pour obtenir un allongement de 20%, est inférieure ou égale à 1 000 N/m, de préférence inférieure ou égale à 800 N/m, et
- la force de traction dudit film de polymère non halogéné du support de décoration, pour obtenir un allongement de 20%, est inférieure ou égale à 1 500 N/m, de préférence inférieure ou égale à 1 000 N/m, et de préférence encore un allongement à la rupture supérieur à 100%.

11. Film autoadhésif multicouche selon l'une des revendications 1 à 10, **caractérisé en ce que** lesdites couches d'adhésif sont constituées d'adhésif de type polyacrylique.

12. Film autoadhésif multicouche selon l'une des revendications 1 à 11, **caractérisé en ce que** ledit polymère fluoré anti-graffiti est choisi parmi le poly(fluorure de vinyl) (PVF), le poly(fluorure de vinylidène) (PVDF), le polyéthylène tétrafluoroéthylène (ETFE), le polyéthylène propylène fluoré (FEP), un copolymère perfluoroalcoxy (PFA) et le polychlorotrifluoroéthylène (ETCFE).

13. Film autoadhésif multicouche selon l'une des revendications 1 à 12, **caractérisé en ce que** ladite première couche d'adhésif présente un grammage inférieur ou égal à 40 g/m² avec une force d'adhésion sur verre supérieure à 500 N/m, et ladite deuxième couche d'adhésif présente un grammage inférieur ou égal à 50 g/m² avec une force d'adhésion sur verre inférieure à 2000 N/m, les dites forces d'adhésion étant mesurées selon la norme ASTM D-1000-78.

14. Film autoadhésif multicouche selon l'une des revendications 1 à 13, **caractérisé en ce que** ladite deuxième couche d'adhésif est appliquée sur un liner (6) de protection temporaire, comprenant une couche de papier ou film polymère revêtu d'une couche antiadhésive, de préférence ledit liner étant une feuille de papier revêtue d'une couche de silicone.

15. Utilisation d'un film autoadhésif selon l'une des revendications 1 à 14 pour une application sur une surface tridimensionnelle d'un objet, de préférence destiné à être exposé à l'extérieur, de préférence encore un véhicule ferroviaire.

## Patentansprüche

1. Selbstklebende Mehrschichtfolie für Antigraffitischutz, umfassend einen Mehrschichtkomplex (1), bestehend aus:
- einer Antigraffitischutzschicht auf der Oberfläche, gebildet von einer transparenten Fluorpolymerfolie (2), und
- einer ersten Haftschicht aus nicht halogeniertem transparentem Polymer (3) und
- einer Dekorationsträgerfolie, gebildet von einem nicht halogenierten Polymer (4), und
- einer zweiten druckempfindlichen Haftschicht aus nicht halogeniertem Polymer (5),
wobei der Mehrschichtkomplex Eigenschaften aufweist, die ihn befähigen, bei Raumtemperatur von 0 bis 35 °C, vorzugsweise von 15 bis 25 °C, manuell dehnbar zu sein, um auf einem Träger mit dreidimensionaler Oberfläche aufgebracht zu sein, wobei die Längungseigenschaften derart sind, dass die Zugkraft des Mehrschichtkomplexes zwecks Erreichung einer Längung von 20 % kleiner oder gleich 2000 N/m beträgt, wobei die Längung und die Zugkraft gemäß den Normen NF EN 1940 und 1941 gemessen werden.

2. Selbstklebende Mehrschichtfolie nach Anspruch 1, **dadurch gekennzeichnet, dass** der Mehrschichtkomplex eine Stärke von 50 bis 500 pm und eine Reißdehnung über 100 % mit einer Zugfestigkeit unter 6000 N/m aufweist, wobei die Längung und die Zugkraft gemäß den Normen NF EN 1940 und 1941 gemessen werden.

3. Selbstklebende Mehrschichtfolie nach Anspruch 1 oder 2, **dadurch gekennzeichnet, dass** der Mehrschichtkomplex Feuerfestigkeits- und verminderte Toxizitätseigenschaften bei Verbrennung derart aufweist, dass die Folie mindestens M1 gemäß der französischen Feuerreaktionsnorm NF P 92-501 und mindestens F4, vorzugsweise mindestens F3, gemäß der französischen Rauchgastoxizitätsnorm NF F 16-101 und den Methoden NF X 70-100 und NF X 10-702 eingestuft ist, und Antigraffitischutzeigenschaften, die mindestens G1, vorzugsweise G0, gemäß der französischen Norm NF F 31-112 eingestuft sind.

4. Selbstklebende Mehrschichtfolie nach einem der Ansprüche 1 bis 3, **dadurch gekennzeichnet, dass** der Mehrschichtkomplex umfasst:
- unter 30 % hinsichtlich Gewicht oder Stärke von Antigraffiti-Fluorpolymerfolie, und
- über 70% hinsichtlich Gewicht oder Stärke von nicht halogeniertem Polymer als Dekorationsträgerfolie und von erster und zweiter Haftschicht.

5. Selbstklebende Mehrschichtfolie nach einem der Ansprüche 1 bis 4, **dadurch gekennzeichnet, dass** die Dekorationsträgerfolie aus nicht halogeniertem Polymer eine Folie ist, die durch Beschichtung gewonnen wird, wobei das nicht halogenierte Polymer aus einem Polyurethan oder einem Polymer oder Copolymer ausgewählt ist, das mindestens Vinylmonomere umfasst, die aus den Vinyl-, Vinylacetat- und Acrylatmonomeren ausgewählt sind.

6. Selbstklebende Mehrschichtfolie nach einem der Ansprüche 1 bis 5, **dadurch gekennzeichnet, dass** das nicht halogenierte Polymer der Dekorationsträgerfolie (4) ein Acrylpolymer ist.

7. Selbstklebende Mehrschichtfolie nach Anspruch 6, **dadurch gekennzeichnet, dass** der Mehrschichtkomplex aufweist:
- 1 bis 15 % hinsichtlich Gewicht oder Stärke von Fluorpolymerfolie, und
- 50 bis 75 % hinsichtlich Gewicht oder Stärke von Acrylpolymerfolie, und
- 10 bis 30 % hinsichtlich Gewicht oder Stärke von erster und zweiter Haftschicht.

8. Selbstklebende Mehrschichtfolie nach einem der Ansprüche 1 bis 5, **dadurch gekennzeichnet, dass** das nicht halogenierte Polymer der Dekorationsträgerfolie ein Polyurethan (4) ist.

9. Selbstklebende Mehrschichtfolie nach Anspruch 8, **dadurch gekennzeichnet, dass** der Mehrschichtkomplex aufweist:
- 10 bis 30 % hinsichtlich Gewicht oder Stärke von Fluorpolymerfolie, und
- 20 bis 50 % hinsichtlich Gewicht oder Stärke von Polymerpolyurethanfolie, und
- 20 bis 60 % hinsichtlich Gewicht oder Stärke von erster und zweiter Haftschicht.

10. Selbstklebende Mehrschichtfolie nach einem der Ansprüche 1 bis 9, **dadurch gekennzeichnet, dass** die Antigraffitischutzschichtfolie und die Dekorationsträgerfolie die folgende Zug- und Längungskraft aufweisen, gemessen gemäß den Normen NF EN 1940 und 1941:
- die Zugkraft der Antigraffitifluorpolymerfolie beträgt, um eine Längung von 20 % zu erhalten, kleiner oder gleich 1000 N/m, vorzugsweise kleiner oder gleich 800 N/m, und
- die Zugkraft der Folie aus nicht halogeniertem Polymer des Dekorationsträgers beträgt, um eine Längung von 20 % zu erhalten, kleiner oder gleich 1500 N/m, vorzugsweise kleiner oder gleich 1000 N/m, und ebenfalls vorzugsweise eine Reißdehnung über 100 %.

11. Selbstklebende Mehrschichtfolie nach einem der Ansprüche 1 bis 10, **dadurch gekennzeichnet, dass** die Haftschichten von Haftmittel des Typs Polyacryl gebildet sind.

12. Selbstklebende Mehrschichtfolie nach einem der Ansprüche 1 bis 11, **dadurch gekennzeichnet, dass** das fluorierte Antigraffitipolymer aus dem Polyvinylfluorid (PVF), dem Polyvinylidenfluorid (PVDF), dem Polyethylentetrafluorethylen (ETFE), dem Fluorpolyethylenpropylen (FEP), einem Perfluoralcoxycopolymer (PFA) und dem Polychlortrifluorethylen (ETCFE) ausgewählt ist.

13. Selbstklebende Mehrschichtfolie nach einem der Ansprüche 1 bis 12, **dadurch gekennzeichnet, dass** die erste Haftschicht ein Flächengewicht von unter oder gleich 40 g/m² mit einer Adhäsionskraft auf Glas über 500 N/m aufweist und die zweite Haftschicht ein Flächengewicht von unter oder gleich 50 g/m² mit einer Adhäsionskraft auf Glas unter 2000 N/m aufweist, wobei die Adhäsionskräfte gemäß der Norm ASTM D-1000-78 gemessen werden.

14. Selbstklebende Mehrschichtfolie nach einem der Ansprüche 1 bis 13, **dadurch gekennzeichnet, dass** die zweite Haftschicht auf einen temporären Schutzliner (6) aufgetragen wird, umfassend eine Schicht aus Papier oder Polymerfolie, beschichtet mit einer Antihaftschicht, wobei der Liner vorzugsweise ein Papierbogen, beschichtet mit einer Silikonschicht, ist.

15. Verwendung einer selbstklebenden Folie nach einem der Ansprüche 1 bis 14 für ein Aufbringen auf einer dreidimensionalen Oberfläche eines Objekts, das vorzugsweise bestimmt ist, nach außen gerichtet zu sein, vorzugsweise ebenfalls eines Schienenfahrzeugs.

## Claims

1. A multilayer self-adhesive film for anti-graffiti protection, comprising a multilayer complex (1) consisting of:
- an anti-graffiti protective layer on the surface made of a transparent fluorinated polymer film (2), and
- a first adhesive layer of transparent non-halogenated polymer (3), and
- a decoration-supporting film made of a non-halogenated polymer (4), and
- a second adhesive, pressure-sensitive layer of non-halogenated polymer (5),
said multilayer complex having properties making it able to be stretched manually at ambient temperature from 0 to 35°C, preferably from 15 to 25°C, for application to a support of three-dimensional structure, having elongation properties such that the tensile strength of said multilayer complex to obtain 20% elongation is less than or equal to 2000 N/m, elongation and tensile strength being measured according to standards NF EN 1940 and 1941.

2. The multilayer self-adhesive film according to claim 1, **characterized in that** said multilayer complex has a thickness of 50 to 500 µm and elongation at break higher than 100% with tensile strength less than 6000 N/m, elongation and tensile strength being measured according to standards NF EN 1940 and 1941.

3. The multilayer self-adhesive film according to claim 1 or 2, **characterized in that** said multilayer complex has fire resistance and reduced combustive toxicity properties such that said film is rated at least M1 in accordance with French fire reaction test standard NF P 92-501 and at least F4, preferably at least F3, according to French smoke toxicity standard NF F 16-101 and methods NF X 70-100 and NF X 10-702, and has anti-graffiti protection properties rated at least G1, preferably G0, according to French standard NF F 31-112.

4. The multilayer self-adhesive film according to one of claims 1 to 3, **characterized in that** said multilayer complex comprises:
- less than 30% by weight or by thickness of said anti-graffiti fluorinated polymer film, and
- more than 70% by weight or by thickness of said non-halogenated polymer, as decoration-supporting film, and of said first and second adhesive layers.

5. The multilayer self-adhesive film according to one of claims 1 to 4, **characterized in that** said decoration-supporting film of non-halogenated polymer is a film obtained by coating, said non-halogenated polymer being selected from among a polyurethane or polymer or copolymer at least comprising vinyl monomers selected from among vinyl, vinyl acetate and acrylate monomers.

6. The multilayer self-adhesive film according to one of claims 1 to 5, **characterized in that** said non-halogenated polymer of the decoration-supporting film (4) is an acrylic polymer.

7. The multilayer self-adhesive film according to claim 6, **characterized in that** said multilayer complex comprises:
- 1 to 15% by weight or by thickness of said fluorinated polymer film, and
- 50 to 75% by weight or by thickness of said acrylic polymer film, and
- 10 to 30% by weight or by thickness of said first and second adhesive layers.

8. The multilayer self-adhesive film according to one of claims 1 to 5, **characterized in that** said non-halogenated polymer of the decoration-supporting film is a polyurethane (4).

9. The multilayer self-adhesive film according to claim 8, **characterized in that** said multilayer complex has:
- 10 to 30% by weight or by thickness of said fluorinated polymer film, and
- 20 to 50% by weight or by thickness of said polyurethane polymer film, and
- 20 to 60% by weight or by thickness of said first and second adhesive layers.

10. The multilayer self-adhesive film according to one of claims 1 to 9, **characterized in that** the anti-graffiti protective film layer and the decoration-supporting film have the following tensile strength and elongation measured according to standards NF EN 1940 and 1941:
- the tensile strength of said anti-graffiti fluorinated polymer film to obtain 20% elongation is less than or equal to 1000 N/m, preferably less than or equal to 800 N/m, and
- the tensile strength of said decoration-supporting, non-halogenated polymer film to obtain 20% elongation is less than or equal to 1500 N/m, preferably less than or equal to 1000 N/m, and more preferably elongation at break higher than 100%.

11. The multilayer film according to one of claims 1 to 10, **characterized in that** said adhesive layers are made of adhesive of polyacrylic type.

12. The multilayer self-adhesive film according to one of claims 1 to 11, **characterized in that** said anti-graffiti fluorinated polymer is selected from among polyvinyl fluoride (PVF), polyvinylidene fluoride (PVDF), ethylene tetrafluoroethylene (ETFE), fluorinated ethylene propylene (FEP), a perfluoroalkoxy copolymer (PFA) and polychlorotrifluoroethylene (PCTFE).

13. The multilayer self-adhesive film according to one of claims 1 to 12, **characterized in that** said first adhesive layer has a gram weight of less than or equal to 40 g/m² with adhesion strength on glass higher than 500 N/m, and said second adhesive layer has a gram weight of less than or equal to 50 g/m² with adhesion strength on glass less than 2000 N/m, said adhesion strengths being measured according to standard ASTM D-1000-78.

14. The multilayer self-adhesive film according to one of claims 1 to 13, **characterized in that** said second adhesive layer is applied to a temporary protective liner (6) comprising a paper layer or polymer film coated with an anti-adhesive layer, preferably said liner being a sheet of paper coated with a silicone layer.

15. Use of a self-adhesive film according to one of claims 1 to 14 for application to a three-dimensional surface of an object, preferably intended for outdoor exposure, further preferably a railway vehicle.
